# FASCICULE DE BREVET EUROPEEN

(11) **EP 0 442 239 B1**
(45) Date de publication et mention de la délivrance du brevet: **02.03.1994**
(21) Numéro de dépôt: 90440129.6
(22) Date de dépôt: 28.12.1990
(51) Int. Cl.: B65G 59/08, B65G 49/06

(54) **Machine à dépiler des plaques, en particulier des plaques de verre à bords taillés chanfreinés ou arrondis**
Maschine zum Entstapeln von Platten, insbesondere von Glasscheiben mit geschliffenen schrägen oder abgerundeten Kanten
Machine for unstacking sheet material, more particularly glass sheets with polished, chamfered or rounded edges

(30) Priorité: 15.02.1990 FR 9002316
(43) Date de publication de la demande: 21.08.1991
(73) Titulaire: VTF INDUSTRIES, S.A.R.L., F-57870 Troisfontaines (FR)
(72) Inventeur: Winger, Gabriel, F-57870 Walscheid (FR)
(74) Mandataire: Nuss, Pierre

(56) Documents cités:
- DE-A- 3 012 752
- DE-U- 8 707 402
- FR-A- 923 939
- US-A- 3 612 251
- US-A- 4 093 083

## Description

La présente invention concerne le domaine de la manutention de plaques, en particulier de plaques de verres à bords taillés, chanfreinés ou arrondis, notamment de plaques destinées à subir un traitement de surface, un usinage ou une simple manutention et a pour objet une machine à dépiler de telles plaques.

Actuellement, les industries de traitement de surfaces, d'usinage ou de manutention de plaques, en particulier de plaques en verre, sont confrontées à un problème de dépilage de telles plaques, qui sont généralement préalablement nettoyées et qui, lorsqu'elles sont d'un format relativement réduit et d'une épaisseur comprise entre 3 mm et 8 mm, présentent une rigidité importante. Il en résulte que lors du dépilage ces plaques ont tendance à rester collées les unes aux autres par un effet ventouse, de sorte que leur entrée dans une machine de traitement, ou autre, située en aval devient impossible, ce qui entraîne de nombreuses interruptions du cycle de traitement, d'usinage ou de manutention obligeant à des interventions correspondantes du personnel de surveillance.

Par ailleurs, les machines de dépilage connues présentent généralement un cycle de fonctionnement relativement lent, à savoir de l'ordre de quinze secondes, pour alimenter la machine en aval. Cette machine en aval peut être, par exemple, une machine de sérigraphie destinée à réaliser des impressions sur la surface des plaques en verre, en vue d'un émaillage ultérieur, et son cycle de fonctionnement est de l'ordre de cinq secondes. Il en résulte qu'avec les machines de dépilage actuelles le rendement optimal des machines de sérigraphie ne peut pas être atteint et donc que le rendement global de l'installation lation est relativement faible.

En outre, les machines de dépilage existantes saisissent généralement les plaques de verre au moyen de ventouses et déposent ces plaques sur un convoyeur à bandes, un dispositif de séparation des plaques présentées sur un tréteau pouvant être prévu afin d'assurer le décollement individuel. Un tel dispositif de séparation peut se présenter sous forme d'un dard de soufflage pneumatique envoyant un jet d'air au niveau du joint entre deux plaques successives. Cependant, un tel dispositif est d'une efficacité quasiment nulle dans le cas d'utilisation avec des plaques de dimensions relativement faibles et présentant des faces parfaitement nettoyées, ces plaques étant alors appliquées tellement intimement l'une contre l'autre qu'une formation d'un film d'air devient impossible.

Il est également connu de réaliser le décollement de plaques en faisant intervenir la flexibilité de celles-ci, mais dans le cas de plaques de petits formats et d'épaisseurs relativement importantes par rapport à ce format, cette flexibilité devient quasiment nulle et n'est donc plus exploitable.

Enfin, les machines de dépilage existantes posent également un problème de prise du verre sur la face à traiter ou à usiner ultérieurement, notamment à sérigraphier, du fait que les plaques sont déposées par le dispositif à ventouses sur le transporteur, leur face à traiter tournée vers le haut et donc au contact desdites ventouses. Il en résulte que les ventouses laissent des traces de salissures et des empreintes sur lesdites surfaces, ce qui entraîne un refus de l'émail par lesdites surfaces et donc une réalisation de pièces défectueuses.

On connaît également, par US-A-4 093 083, une machine à dépiler des plaques selon la première partie de la revendication 1 constituée par un tréteau de présentation des plaques à dépiler, et par un moyen de prise et de dépôt des plaques individuelles sur un transporteur à bandes d'alimentation d'une machine de traitement, d'usinage ou de manutention en aval, de manière à déposer la plaque sur le transporteur avec sa face à traiter tournée vers le haut, la prise de la plaque étant effectuée sur sa face opposée.

Une telle machine permet une prise correcte des plaques, mais ne permet pas d'assurer leur délivrance individuelle au moyen de prise et de dépôt, de sorte que plusieurs plaques peuvent éventuellement être déplacées par ledit moyen avec un risque élevé de glissement entre lesdites plaques et de chute de celles restées collées à la plaque saisie.

La présente invention a pour but de pallier ces inconvénients.

Elle a, en effet, pour objet une machine à dépiler des plaques, en particulier des plaques de verre à bords taillés, chanfreinés ou arrondis, essentiellement constituée par un tréteau de présentation des plaques à dépiler et par un moyen de prise et de dépôt des plaques individuelles sur un transporteur à bandes d'alimentation d'une machine de traitement, d'usinage ou de manutention en aval, de manière à déposer la plaque sur le transporteur, sa face à traiter, à usiner ou autre, étant tournée vers le haut, la prise de la plaque étant effectuée sur sa face opposée.

Selon l'invention, cette machine comprend un dispositif de séparation individuelle desdites plaques qui est constitué par une tête séparatrice mobile au-dessus des plaques et pourvue d'un couteau trancheur métallique central et en ce que le moyen de prise et de dépôt des plaques individuelles est constitué par un chariot porte-ventouses monté à l'extrémité du transporteur, entre les bandes de ce dernier, avec possibilité de déplacement en translation et de pivotement relativement au transporteur.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale d'une machine conforme à l'invention ;
la figure 2 est une vue en élévation latérale, à plus grande échelle, de la tête séparatrice mobile, et
la figure 3 est une vue en élévation frontale de la tête suivant la figure 2, le détecteur de présence de plaques étant enlevé.

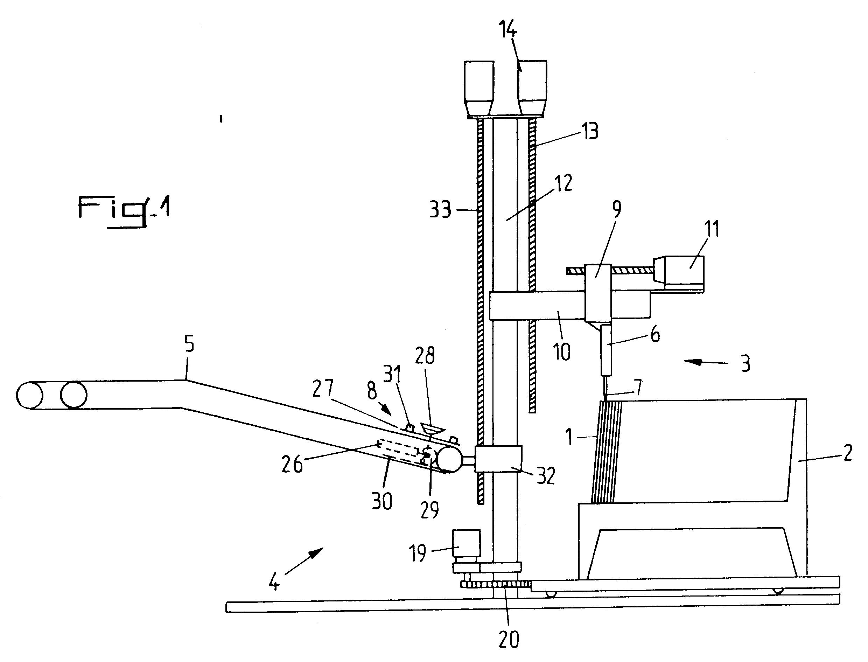

Conformément à l'invention, et comme le montre plus particulièrement, à titre d'exemple, la figure 1 des dessins annexés, la machine à dépiler des plaques, en particulier des plaques de verre 1 à bords taillés, chanfreinés ou arrondis, qui est essentiellement constituée par un tréteau 2 de présentation des plaques 1 à dépiler, par un dispositif 3 de séparation individuelle desdites plaques 1 et par un moyen 4 de prise et de dépôt des plaques individuelles 1 sur un transporteur à bandes 5 d'alimentation d'une machine de traitement, d'usinage ou de manutention en aval, est caractérisée en ce que le dispositif 3 de séparation individuelle des plaques 1 est constitué par une tête séparatrice 6 mobile au-dessus des plaques 1 et pourvue d'un couteau trancheur métallique central 7.

En outre, le moyen 4 de prise et de dépôt des plaques individuelles 1 est constitué par un chariot 8 porte-ventouses monté à l'extrémité du transporteur 5, entre les bandes de ce dernier, avec possibilité de déplacement en translation et de pivotement relativement au transporteur 5, de manière à déposer la plaque 1 sur le transporteur 5, sa face à traiter, à usiner ou autre, étant tournée vers le haut, la prise de la plaque 1 étant effectuée sur sa face opposée.

La tête séparatrice 6, pourvue d'un couteau trancheur métallique central 7, est montée, au moyen d'un chariot 9, sur un guide horizontal 10 et est déplaçable sur ce dernier au moyen d'un vérin 11 mécanique, pneumatique ou hydraulique, ledit guide horizontal 10 étant lui-même monté de manière déplaçable verticalement sur une broche verticale 12 de guidage, au moyen d'un vérin à vis 13 à actionnement électrique 14 ou pneumatique ou hydraulique, ledit guide horizontal 10 coopérant, en fin de course de descente, avec un micro-contact (non représenté) de détection de l'arrivée de la tête séparatrice 6 sur les plaques 1 du tréteau 2. Ainsi, il est possible de réaliser un réglage de positions, tant verticale qu'horizontale, de la tête séparatrice 6 par rapport au transporteur 5 et au moyen 4 de prise et de dépôt des plaques individuelles 1 sur le transporteur 5 (figure 1), le contact de fin de course coopérant avec le guide 10 formant une sécurité contre un déplacement trop important dudit guide en direction du tréteau 2 et des plaques 1.

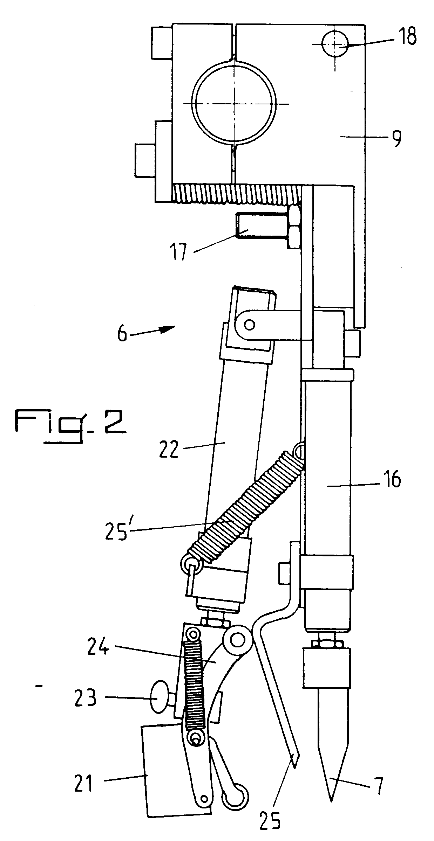

Le couteau trancheur métallique central 7 de la tête séparatrice 6 est réalisé, de préférence, en acier trempé et est muni, en outre, de deux guides latéraux 15 en matière synthétique telle que du P.V.C. ou autre et est déplaçable, d'une part, verticalement au moyen de vérins 16 et, d'autre part, en pivotement par rapport au chariot 9 autour d'un axe 18 de ce dernier au moyen d'un vérin de basculement 17. Les deux vérins 16 et 17 permettent, en combinaison avec le couteau trancheur 7 et les guides latéraux 15 de ce dernier, d'une part, une pénétration dudit couteau 7 entre deux plaques afin de décoller la plaque extérieure 1 de 1a pile de plaques du treteau 2 et, d'autre part, un basculement de ladite plaque décollée 1 en direction du moyen 4 (figures 1 et 2).

Le tréteau 2 de support des plaques 1 est monté de manière déplaçable en translation par rapport au dispositif de séparation 3 et au moyen 4 et est raccordé, de préférence, à 1a broche verticale 12 au moyen d'un vérin ou d'un ensemble motoréducteur 19 - crémaillère 20, dont la course est contrôlée au moyen d'une butée amovible 21 de fin de course déclenchant le motoréducteur 19 et montée de manière déplaçable sur la tête séparatrice 6 au moyen d'un vérin 22, la position de la butée 21 par rapport au couteau trancheur 7, correspondant en position de service de la butée 21 à une épaisseur de plaque 1, étant réglable au moyen d'une vis 23 agissant sur un levier 24 de support de la butée 21, ledit levier coopérant avec une came 25 solidaire de la tête séparatrice 6 et étant appliqué contre cette came au moyen d'un ressort 25' . Ainsi, la butée 21 peut être amenée devant le tréteau 2 de support des plaques 1 au moyen du vérin 22, sa position relativement à l'axe du couteau trancheur 7 étant réglée par la course du levier 24 sur la came 25. Lors du déplacement du tréteau 2 dans sa position de dépilage d'une plaque 1, la plaque à dépiler actionne le contact de la butée 21 qui déclenche le motoréducteur 19, arrêtant ainsi le déplacement du tréteau 2.

Le chariot 8 porte-ventouses, qui est monté à l'extrémité du transporteur 5, entre les bandes de ce dernier, est essentiellement constitué par un vérin 26, dont l'extrémité de la tige supporte une palette 27 de support de ventouses 28, ladite palette étant montée sur la tige du vérin 26 au moyen d'un axe pourvu d'un secteur denté 29 coopérant avec une crémaillère 30 s'étendant sous le transporteur 5. Ainsi, lors de l'actionnement du vérin 26, la palette 27 se déplace en direction du treteau 2 et effectue simultanément un mouvement de pivotement dans une position sensiblement verticale de réception d'une plaque 1 à déposer sur le transporteur 5.

Selon une variante de réalisation de l'invention, la palette 27 peut être pourvue d'une ventouse 28 unique et étagée et de plots 31 en caoutchouc ou en mousse assurant le maintien de la plaque 1 lors de la prise par la ventouse 28.

Dans un tel mode de réalisation, la ventouse étagée a tendance à entraîner la plaque 1 en direction de la palette 27 quelle que soit la position initiale de la plaque, notamment en inclinaison par rapport à la palette 27, les plots 31 assurant le maintien pendant l'opération de pivotement et de dépôt de la plaque 1 sur le transporteur 5.

Enfin, selon une autre caractéristique de l'invention, l'extrémité du transporteur 5 tournée vers le tréteau 2 est avantageusement montée de manière déplaçable verticalement sur un manchon 32 guidé sur la broche verticale 12 et pouvant être actionné au moyen d'un vérin mécanique 33 ou d'un vérin pneumatique ou hydraulique. Ce manchon 32 permet une adaptation en hauteur du chariot porte-ventouses 8 à la position des plaques 1 sur le tréteau 2 (figure 1).

L'actionnement des différents vérins et moteurs de déplacement et/ou de basculement est avantageusement commandé au moyen d'un automate programmable coopérant, d'une part, avec les butées et contacts de fin de course et, d'autre part, avec au moins un détecteur de présence de plaques de la machine située en aval. La machine située en aval peut être une machine de sérigraphie ou encore toute autre machine de transformation ou d'usinage.

La machine conforme à l'invention fonctionne de la manière suivante :

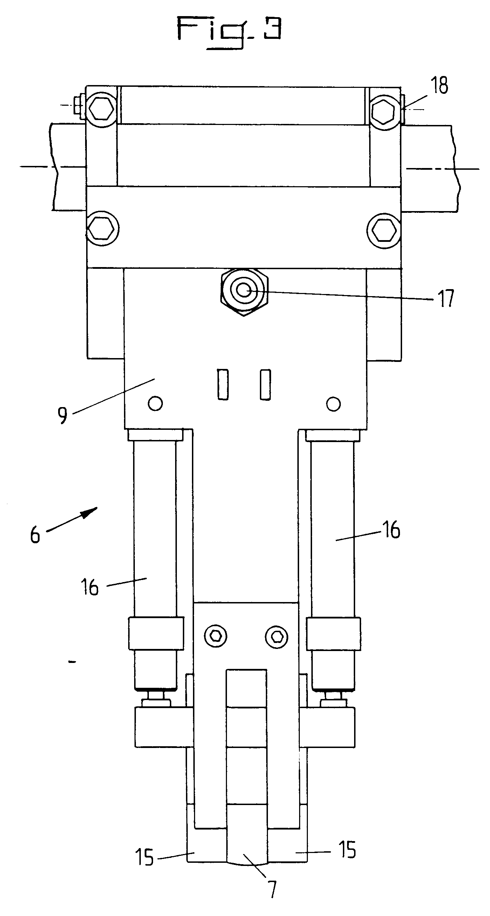

Après réglage préalable de la position horizontale de la tête séparatrice 6 par rapport à la broche verticale de guidage 12 sur son guide 10 et de la position de l'extrémité du transporteur 5, la machine conforme à l'invention peut être mise en marche. La tête séparatrice 6 est alors déplacée dans un premier temps dans une position prédéterminée au-dessus du tréteau 2 supportant les plaques 1 et le vérin 22 est actionné de manière à déplacer la butée de fin de course 21 devant le tréteau 2 muni des plaques 1 et à déclencher le motoréducteur 19 d'entraînement dudit tréteau 2 dès qu'une plaque 1 appuie sur la butée 21. Le vérin 26 supportant la palette 27 est alors actionné de telle manière que la palette 27 soit déplacée en direction du tréteau 2 et soit pivotée dans une position légèrement inclinée par rapport à la verticale. A l'arrivée en fin de course de sortie du vérin 26, le vérin 16 de déplacement du couteau trancheur 7 et des guides latéraux 15 est actionné à son tour de manière à insérer ledit couteau 7 et les guides 15 entre la plaque à dépiler et les plaque devant rester sur le tréteau 2 et, après cette séparation correspondant à l'arrivée de fin de course du vérin 16, l'ensemble couteau trancheur et guide 15 est pivoté autour de l'axe 18 du chariot 9 au moyen du vérin de basculement 17 (figures 2 et 3), ce qui entraîne un basculement de la plaque 1 en direction de la palette 27 et de la ou des ventouses 28.

Le circuit d'aspiration relié à ces dernières est alors actionné et les détecteurs de présence de vide qui leur sont affectés déclenchent l'actionnement en sens inverse du vérin 26, ce qui a pour effet de faire pivoter l'ensemble palette 27 - ventouse 28 - plaque 1 dans une direction parallèle à celle du transporteur 5, dans laquelle la plaque 1 peut être posée sur les bandes dudit transporteur par suppression du vide dans la ou les ventouses 28 à l'arrivée en position rétractée du vérin 26. Pendant l'opération de pivotement d'une plaque 1, la tête séparatrice 6 peut effectuer, en temps masqué, une nouvelle séparation d'une plaque 1 et la rendre prête à être saisie par le chariot porte-ventouses 8.

Grâce à l'invention, il est possible de réaliser une machine de dépilage permettant la manutention de plaques, notamment en verre de petit format, parfaitement nettoyées sur leurs deux faces, en présentant leur face devant subir une opération de traitement de surface, d'usinage ou autre, ultérieure parfaitement propre tournée vers le haut.

En outre, la machine conforme à l'invention permet la réalisation d'opérations en temps masqué, de sorte que son cycle de travail unitaire peut être écourté et que le rendement global d'une unité de fabrication intégrant cette machine peut être nettement amélioré.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Machine à dépiler des plaques, en particulier des plaques de verre (1) à bords taillés, chanfreinés ou arrondis, essentiellement constituée par un tréteau (2) de présentation des plaques (1) à dépiler et par un moyen (4) de prise et de dépôt des plaques individuelles (1) sur un transporteur à bandes (5) d'alimentation d'une machine de traitement, d'usinage ou de manutention en aval, de manière à déposer la plaque (1) sur le transporteur (5), sa face à traiter, à usiner ou autre, étant tournée vers le haut, la prise de la plaque (1) étant effectuée sur sa face opposée, caractérisée en ce que la machine comprend un dispositif (3) de séparation individuelle des plaques (1) qui est constitué par une tête séparatrice (6) mobile au-dessus des plaques (1) et pourvue d'un couteau trancheur métallique central (7) et en ce que le moyen (4) de prise et de dépôt des plaques individuelles est constitué par un chariot porte-ventouses (8) monté à l'extrémité du transporteur (5), entre les bandes de ce dernier, avec possibilité de déplacement en translation et de pivotement relativement au transporteur.

2. Machine, suivant la revendication 1, caractérisée en ce que la tête séparatrice (6), pourvue d'un couteau trancheur métallique central (7), est montée, au moyen d'un chariot (9), sur un guide horizontal (10) et est déplaçable sur ce dernier au moyen d'un vérin (11) mécanique, pneumatique ou hydraulique, ledit guide horizontal (10) étant lui-même monté de manière déplaçable verticalement sur une broche verticale (12) de guidage, au moyen d'un vérin à vis (13) à actionnement électrique (14) ou pneumatique ou hydraulique, ledit guide horizontal (10) coopérant, en fin de course de descente, avec un micro-contact de détection de l'arrivée de la tête séparatrice (6) sur les plaques (1) du tréteau (2).

3. Machine, suivant la revendication 2, caractérisée en ce que le couteau trancheur métallique central (7) de la tête séparatrice (6) est réalisé, de préférence, en acier trempé et est muni, en outre, de deux guides latéraux (15) en matière synthétique telle que du P.V.C. ou autre et est déplaçable, d'une part, verticalement au moyen de vérins (16) et, d'autre part, en pivotement par rapport au chariot (9) autour d'un axe (18) de ce dernier au moyen d'un vérin de basculement (17).

4. Machine, suivant l'une quelconque des revendications 1 et 2, caractérisée en ce que le tréteau (2) de support des plaques (1) est monté de manière déplaçable en translation par rapport au dispositif de séparation (3) et au moyen (4) et est raccordé, de préférence, à la broche verticale (12) au moyen d'un vérin ou d'un ensemble motoréducteur (19) - crémaillère (20), dont la course est contrôlée au moyen d'une butée amovible (21) de fin de course déclenchant le motoréducteur (19) et montée de manière déplaçable sur la tête séparatrice (6) au moyen d'un vérin (22), la position de la butée (21) par rapport au couteau trancheur (7), correspondant en position de service de la butée (21) à une épaisseur de plaque (1), étant réglable au moyen d'une vis (23) agissant sur un levier (24) de support de la butée (21), ledit levier coopérant avec une came (25) solidaire de la tête séparatrice (6) et étant appliqué contre cette came au moyen d'un ressort (25').

5. Machine, suivant la revendication 1, caractérisée en ce que le chariot (8) porte-ventouses, qui est monté à l'extrémité du transporteur (5), entre les bandes de ce dernier, est essentiellement constitué par un vérin (26), dont l'extrémité de la tige supporte une palette (27) de support de ventouses (28), ladite palette étant montée sur la tige du vérin (26) au moyen d'un axe pourvu d'un secteur denté (29) coopérant avec une crémaillère (30) s'étendant sous le transporteur (5).

6. Machine, suivant la revendication 5, caractérisée en ce que la palette (27) est pourvue d'une ventouse (28) unique et étagée et de plots (31) en caoutchouc ou en mousse assurant le maintien de la plaque (1) lors de la prise par la ventouse (28).

7. Machine, suivant l'une quelconque des revendications 1 et 5, caractérisée en ce que l'extrémité du transporteur (5) tournée vers le tréteau⁻(2) est avantageusement montée de manière déplaçable verticalement sur un manchon (32) guidé sur la broche verticale (12) et est actionné au moyen d'un vérin mécanique (33) ou d'un vérin pneumatique ou hydraulique.

8. Machine, suivant l'une quelconque des revendications 1 à 7, caractérisée en ce que l'actionnement des différents vérins et moteurs de déplacement et/ou de basculement est avantageusement commandé au moyen d'un automate programmable coopérant, d'une part, avec les butées et contacts de fin de course et, d'autre part, avec au moins un détecteur de présence de plaques de la machine située en aval.

## Patentansprüche

1. Maschine zum Entstapeln von Platten, insbesondere von Glasscheiben mit geschliffenen, schrägen oder abgerundeten Kanten im wesentlichen bestehend aus einem Aufnahmegerüst für den Plattenstapel und einer Greif- und Ablagevorrichtung (4) für einzelne Platten (1) auf einem Transportband (5) zur Zuführung zu einer in Förderrichtung nachgeschalteten Behandlungs-, Bearbeitungs- und Transporteinrichtung, auf eine solche Weise, daß die Platte (1) auf dem Transportband mit ihrer zu behandelnden, zu bearbeitenden odgl. Seite nach oben gedreht ist, hingegen das Erfassen der Platte auf der gegenüberliegenden Seite erfolgt,
**dadurch gekennzeichnet,** daß die Maschine eine Vorrichtung (3) zur Separierung in einzelne Platten (1) aufweist, die aus einem oberhalb der Platten (1) mobilen Trennkopf (6) besteht und mit einem mittigen Trennmesser (7) aus Metall versehen ist und die Greif- und Ablagevorrichtung der einzelnen Platten (4) aus einem mit Saughebern bestückten Wagen (8) besteht, der am Ende des Transportbandes (5) zwischen Bändern derart montiert sind, daß die Möglichkeit der translatorischen Verschiebung als auch der Verschwenkung relativ zum Transportband (5) besteht.

2. Maschine gemäß Anspruch 1, **dadurch gekennzeichnet,** daß der Trennkopf (6), der mit einem mittig angebrachten Trennmesser (7) aus Metall versehen ist, mit Hilfe eines Schlittens (9) auf einer horizontalen Führung (10) befestigt und auf letzterer mit Hilfe einer mechanischen, pneumatischen oder hydraulischen Winde (11) verschiebbar ist, diese horizontale Führung (10) ihrerseits mit Hilfe einer elektrisch (14) oder pneumatisch oder hydraulisch betätigten Schraubwinde (13) in vertikaler Richtung verschiebbar auf einer vertikalen Führungsspindel (12) befestigt ist, wobei die horizontale Führung (10) am Ende der Abwärtsbewegung mit einem Berührungskontakt zusammenarbeitet, der das Erreichen des Trennkopfes (6) an den auf dem Gerüst (2) befindlichen Platten (1) anzeigt.

3. Maschine gemäß Anspruch 2, **dadurch gekennzeichnet,** daß das mittige Trennmesser (7) des Trennkopfes (6) aus Metall vorzugsweise aus gehärtetem Stahl besteht und im übrigen mit zwei seitlichen Führungen (15) aus synthetischem Material, wie z.B. PVC oder ähnlichem, versehen und räumlich verstellbar ist, einerseits in vertikaler Richtung mit Hilfe von Winden (16) und andererseits als Schwenkbewegung des Schlittens (9) um seine Achse (18) mit Hilfe eines Schwenkantriebes (17).

4. Maschine nach Anspruch 1 oder 2, **dadurch gekennzeichnet**, daß das Aufnahmegerüst (2) für den Plattenstapel (1) relativ zur Separiervorrichtung (3) und zur Greif- und Ablagevorrichtung translatorisch verschiebbar und vorzugsweise mit der vertikalen Spindel (12) über eine Winde oder einer aus untersetzenden Antriebsmotor (19) und Zahnstange (20) gebildeten Anordnung verbunden ist, deren Bewegung mit Hilfe eines abnehmbaren Anschlages (21) gesteuert ist, der am Ende der Bewegung den untersetzenden Antriebsmotors (19) ausklinkt und am Trennkopf (6) mit Hilfe einer Winde (22) verstellbar befestigt ist, der Abstand des Anschlages (21) vom Trennmesser (7), der in Arbeitsposition des Anschlages (21) der Dicke einer Platte (1) entspricht, ist mit Hilfe einer Schraube (23) einstellbar, die auf einen Stützhebel (24) des Anschlages (21) einwirkt, wobei der Hebel (24) mit einem am Trennkopf (6) befestigten Nocken (25) zusammenarbeitet und unter Einwirkung einer Feder (25') an diesem Nocken anliegt.

5. Maschine gemäß Anspruch 1, **dadurch gekennzeichnet**, daß der Wagen (8) mit den Saughebern, der am äußeren Ende des Transportbandes zwischen Bändern befestigt ist, im wesentlichen aus einer Winde (26) besteht, deren äußeres Stangeende eine Palette (27) mit Saugheber (28) trägt, die auf der Gewindestange (26) mit Hilfe eines Bolzens befestigt ist, der seinerseits mit einem Schneckenradsegment (29) versehen ist, das mit einer unter dem Transportband (5) sich erstreckenden Zahnstange (30) zusammenarbeitet.

6. Maschine gemäß Anspruch 5, **dadurch gekennzeich****net,** daß die Palette (27) mit einem einzigen, stufig angeordneten Saugheber (28) und mit Blöcken aus Kautschuk oder Schaumstoff versehen sind, die dem räumlichen Fixieren der Platte während des Ergreifens durch den Saugheber (28) dienen.

7. Maschine nach einem der Ansprüche 1 bis 5, **dadurch gekennzeichnet,** daß das äußere, dem Gerüst zugewandte Ende des Transportbandes (5) vorteilhafterweise in vertikaler Richtung verschiebbar an einer auf der vertikalen Spindel (12) geführten Muffe (32) befestigt ist und mit Hilfe einer mechanischen Winde (33) oder einer pneumatischen oder hydraulischen Winde betätigt wird.

8. Maschine gemäß einem der Ansprüche 1 bis 7, **dadurch gekennzeichnet,** daß die Betätigung der verschiedenen Winden und Verstellmotoren und/oder des Schwenkantriebes vorteilhafterweise mit Hilfe eines programmierbaren Automaten gesteuert wird, der einerseits mit den Anschlägen und den Kontakten am Ende der Bahn und zum anderen mit mindestens einem Detektor zur Anzeige von Platten im in Förderrichtung nachgeordneten Bereich der Maschine zusammenarbeitet.

## Claims

1. Machine for unstacking sheet material, more particularly glass sheets (1) with polished, chamfered or rounded edges, basically comprising a stand (2) for supplying the sheets (1) to be unstacked, and means (4) for taking up and setting down the individual sheets (1) on a multi-belt conveyor (5) of a downstream processing, finishing or handling machine in such a way as to place the sheet (1) on the conveyor (5) with its face which is to be treated, finished or other, being turned upwards whilst the sheet (1) is seized on its opposite face, characterised in that the machine comprises a device (3) for individually separating the sheets (1) which consists of a separating head (6) which is movable above the sheets (1) and has a central metal cutting knife (7) and in that the pick-up and delivery means (4) for the individual sheets comprises a carriage (8) with suction disc holder (8) mounted at the end of the conveyor (5), between the belts of the latter, with the possibility of translatory and pivotal movement relative to the conveyor.

2. Machine according to claim 1, characterised in that the separating head (6), provided with a central metal cutting knife (7) is mounted by means of a carriage (9) on a horizontal guide (10) and is displaceable on the latter by means of a mechanical, pneumatic or hydraulic jack (11), the said horizontal guide (10) being itself mounted vertically displaceable on a vertical guide spindle (12) by means of a screw jack (13) operated electrically (14), pneumatically or hydraulically wherein the said horizontal guide (10) interacts at the end of the downward path with a micro-contact which detects the arrival of the separating head (6) on the sheets (1) of the stand (2).

3. Machine according to claim 2, characterised in that the central metal cutting knife (7) of the separating head (6) is preferably made of tempered steel and is provided moreover with two lateral guides (15) of synthetic material such as PVC or other and is displaceable on the one hand vertically by means of jacks (16) and on the other by pivoting relative to the carriage (9) around an axis (18) of the latter by means of a rocker jack (17).

4. Machine according to any of claims 1 and 2 characterised in that the support stand (2) for the sheets (1) is mounted for translatory displacement relative to the separating device (3) and means (4) and is connected, from preference, to the vertical spindle (12) by means of a jack or toothed rack (20) / motor reduction gear (19) assembly whose path of movement is controlled by means of a detachable abutment (21) at the end of the path which disengages the motor reduction gear (19) and is mounted displaceable on the separating head (6) by means of a jack (22), the position of the abutment (21) relative to the cutting knife (7), corresponding in the operating position of the abutment (21) to the thickness of the sheet (1), being controllable by means of a screw (23) acting on a support lever (24) of the abutment (21) wherein the said lever interacts with a cam (25) integral with the separating head (6) and is placed against this cam by means of a spring (25').

5. Machine according to claim 1, characterised in that the suction disc holder carriage (8) which is mounted at the end of the conveyor (5), between the belts of the latter, is basically comprised of a jack (26) whose shaft end supports a support plate (27) for the suction discs (28) wherein the said support plate is mounted on the shaft of the jack (26) by means of an axis having a toothed sector (29) which interacts with a toothed rack (30) extending beneath the conveyor (5).

6. Machine according to claim 5, characterised in that the support plate (27) is provided with a single cone suction disc (28) and with blocks (31) of rubber or foam ensuring that the sheet (1) is supported as it is seized by the suction disc (28).

7. Machine according to any of claims 1 and 5 characterised in that the end of the conveyor (5) turned towards the stand (2) is advantageously mounted vertically displaceable on a sleeve (32) guided on the vertical spindle (12) and is operated by means of a mechanical jack (33) or a pneumatic or hydraulic jack.

8. Machine according to any of claims 1 to 7 characterised in that the activation of the different jacks and displacement and/or rocker motors is advantageously controlled by means of an automatic program device interacting on the one hand with the abutments and contacts at the end of the path of movement and on the other with at least one sheet detector of the machine located on the downstream side.
